# EUROPÄISCHE PATENTANMELDUNG

(11) **EP 1 653 228 A2**
(43) Veröffentlichungstag der Anmeldung: **03.05.2006**
(21) Anmeldenummer: 05022855.0
(22) Anmeldetag: 20.10.2005
(51) Int. Cl.: G01N 27/00

(54) **Sensoranordnung zur Detektion der mechanischen Überbeanspruchung eines Bauteils oder Bauteil-Verbunds**

(30) Priorität: 26.10.2004 DE 102004052801
(71) Anmelder: DLR Deutsches Zentrum für Luft- und Raumfahrt e.V., 53175 Bonn (DE)
(72) Erfinder: Feiler, Markus, 70563 Stuttgart (DE)
(74) Vertreter: Hoeger, Stellrecht & Partner Patentanwälte

(57) **Zusammenfassung**

Es wird eine Sensoranordnung zur Detektion der mechanischen Überbeanspruchung eines Bauteils oder Bauteil-Verbunds vorgeschlagen, mit mindestens einem flach ausgebildeten elektrischen Element und mit einer Überwachungseinrichtung zur Prüfung mindestens eines elektrischen Parameters des mindestens einen elektrischen Elements, wobei durch das mindestens eine elektrische Element ein Flächenbereich des Bauteils bedeckbar ist.

## Beschreibung

Die Erfindung betrifft eine Sensoranordnung zur Detektion der mechanischen Überbeanspruchung eines Bauteils oder Bauteil-Verbunds.

Die Erfindung betrifft ferner ein Bauteil, insbesondere aus einem faserverstärkten Werkstoff, oder einen Bauteil-Verbund.

Ferner betrifft die Erfindung ein Verfahren zur Detektion von mechanischer Überbeanspruchung an einem Bauteil oder Bauteil-Verbund.

Bauteile, wie beispielsweise strukturelle Bauteile eines Flugzeugs, können durch Impact beschädigt werden. Ein solcher Impact kann beispielsweise durch Fremdkörper erfolgen. Bei solchen Fremdkörpern kann es sich um Hagelkörner oder um aufgewirbelte Betonteile der Startbahn handeln. Auch Beschädigungen durch Servicefahrzeuge am Boden sind möglich. Weiterhin ist auch ein Bauteilbruch durch eine mechanische Überlastung möglich.

Die Erfahrung zeigt, daß insbesondere bei Bauteilen aus Faserverbundwerkstoffen der nichtsichtbare Bereich der Schädigung am Bauteil oft deutlich größer ist als der sichtbare Bereich. In der Praxis tritt das Problem auf, daß Beschädigungen des Bauteils auf der Oberfläche durch optische Begutachtung mindestens nicht vollständig detektiert werden können.

Der Erfindung liegt die Aufgabe zugrunde, eine Sensoranordnung zur Detektion der mechanischen Überbeanspruchung eines Bauteils oder Bauteil-Verbundkörpers bereitzustellen, welche eine einfache und sichere Schadenserkennung ermöglicht.

Diese Aufgabe wird erfindungsgemäß dadurch gelöst, daß mindestens ein flach ausgebildetes elektrisches Element vorgesehen ist und eine Überwachungseinrichtung zur Prüfung mindestens eines elektrischen Parameters des mindestens einen elektrischen Elements vorgesehen ist, wobei durch das mindestens eine elektrische Element ein Flächenbereich des Bauteils bedeckbar ist.

Wenn ein Impact an dem Flächenbereich, welcher durch das mindestens eine elektrische Element abgedeckt ist, erfolgt, dann wird neben dem Bauteil mit einer potentiellen Schädigung auch das elektrische Element beeinflußt. Diese Beeinflussung läßt sich über eine Änderung des mindestens einen elektrischen Parameters berührungslos ermitteln. Dadurch wiederum läßt sich ein Warnsignal abgeben, welches darauf hinweist, daß das Bauteil möglicherweise beschädigt ist. Der Ort der potentiellen Beschädigung läßt sich wiederum über den Ort des elektrischen Elements auf einfache Weise eingrenzen und dadurch ermitteln. Das Bauteil kann dann näher untersucht werden, ob eine tatsächliche Beschädigung aufgetreten ist.

Ganz besonders vorteilhaft ist es, wenn eine Mehrzahl von elektrischen Elementen vorgesehen ist, welche individuell überwachbar sind. Dadurch läßt sich ein großer Flächenbereich überwachen. Durch die individuelle Überwachung der elektrischen Elemente kann, wenn eine Änderung in einem elektrischen Parameter eintritt, ein potentieller Beschädigungsort eingegrenzt werden. Die Überprüfung des Bauteils läßt sich dadurch auf vereinfachte Weise durchführen.

Insbesondere sind die elektrischen Elemente nebeneinander angeordnet. Dadurch läßt sich ein großer Flächenbereich überdecken.

Ganz besonders vorteilhaft ist es, wenn die elektrischen Elemente mit der Überwachungseinrichtung verbunden sind. Über die Überwachungseinrichtung läßt sich dann eine "globale" Überwachung durchführen. Die Überwachungseinrichtung kann beispielsweise Warnsignale abgeben. Sie kann auch definiert den Ort einer möglichen Beschädigung über das oder die elektrischen Elemente, in welchen eine Signaländerung detektiert wurde, anzeigen.

Es ist grundsätzlich möglich, daß ein Bauteil oder Bauteil-Verbund ein Substrat für ein elektrisches Element bildet. Es kann auch vorgesehen sein, daß das mindestens eine elektrische Element von einer Folie umfaßt ist. In einer solchen Folie ist ein elektrisches Element und vorzugsweise eine Mehrzahl von elektrischen Elementen fest positioniert angeordnet. Die Folie läßt sich auf einer Oberfläche oder Grenzfläche eines Bauteils oder Bauteil-Verbunds anordnen und fixieren. Dadurch läßt sich die Sensoranordnung auf einfache Weise an einem Bauteil oder Bauteil-Verbund fixieren. Die Folie kann auch noch weitere Eigenschaften aufweisen. Beispielsweise kann sie so ausgebildet sein, daß der Luftwiderstand reduziert wird.

Insbesondere ist das mindestens eine elektrische Element in eine Folie integriert. Über die Folie läßt sich eine Mehrzahl von elektrischen Elementen gemeinsam handhaben.

Günstigerweise weist dann die Folie elektrische Anschlüsse auf. Beispielsweise ist in die Folie eine Busstruktur integriert. Es können dann extern Signale ausgekoppelt werden, beispielsweise durch eine Überwachungseinrichtung. Dadurch läßt sich ein großer Flächenbereich auf einfache Weise überwachen. Weiterhin ist der Anschluß einer Mehrzahl von elektrischen Elementen an einer Überwachungseinrichtung erleichtert.

Es kann mindestens ein passives elektrisches Element vorgesehen sein. Beispielsweise ist ein Kondensator als elektrisches Element vorgesehen. Über einen Kurzschlußstrom läßt sich beispielsweise eine Beschädigung eines Kondensators detektieren. Ein Kondensator kann beispielsweise eine erste elektrisch leitende Folie, eine isolierende Zwischenschicht und eine zweite elektrisch leitende Folie aufweisen. Durch eine Beschädigung der Isolierschicht kann ein Kurzschlußstrom fließen. Bei der Detektion eines Kurzschlußstroms kann der zugeordnete Flächenbereich des Bauteils auf Beschädigungen überprüft werden.

Ganz besonders vorteilhaft ist es, wenn mindestens ein aktives elektrisches Element vorgesehen ist. Es kann sich dabei um eine Batterie und/oder einen Akkumulator handeln. Entsprechende Dünnfilm-Batterien oder Akkumulatoren sind kommerziell erhältlich. Sie sind flächig ausgebildet, so daß sich mit ihnen ein großer Flächenbereich abdecken läßt. In den Batterien bzw. Akkumulatoren läßt sich auch elektrische Energie speichern, welche prinzipiell nutzbar ist. Verteilt auf eine große Fläche läßt sich also in der Sensoranordnung nutzbare elektrische Energie speichern.

Es ist dann insbesondere günstig, wenn über die Überwachungseinrichtung nutzbare elektrische Energie auskoppelbar ist. Über die Überwachungseinrichtung kann die Energieauskopplung gesteuert werden, beispielsweise derart, daß alle elektrischen Elemente in der Sensoranordnung gleichmäßig entladen werden. Dadurch wird auch bei einer Teilauskopplung von elektrischer Energie die Funktionsfähigkeit der Sensoranordnung sichergestellt.

Insbesondere ist das mindestens eine elektrische Element als Dünnfilm-Element ausgebildet und insbesondere in Dünnschicht-Technologie hergestellt. Das elektrische Element läßt sich dann flach ausbilden und mit ihm läßt sich ein großer Flächenbereich abdecken, wobei sich der Flächenbereich pro elektrischem Element bezüglich Impact bzw. anderen mechanischen Überbelastungen überwachen läßt. Durch die Verwendung einer Mehrzahl von elektrischen Elementen läßt sich der Überwachungsbereich vergrößern.

Der Erfindung liegt ferner die Aufgabe zugrunde, ein Bauteil, insbesondere aus einem Faserverbundwerkstoff, oder einen Bauteil-Verbund bereitzustellen, welches/welcher auf einfache Weise gegenüber mechanischen Überlastungen überwachbar ist.

Diese Aufgabe wird erfindungsgemäß dadurch gelöst, daß das Bauteil oder der Bauteil-Verbund mit einer erfindungsgemäßen Sensoranordnung versehen ist.

Insbesondere ist die Sensoranordnung an mindestens einer Oberfläche oder Grenzfläche angeordnet. Die Bauteil-Sensoranordnung-Kombination läßt sich dadurch auf einfache Weise herstellen, wobei eine Überwachbarkeit auf einfache Weise realisiert ist.

Insbesondere ist die Sensoranordnung an einer durch Impact gefährdeten Oberfläche oder Grenzfläche angeordnet. Beispielsweise ist die Sensoranordnung an einer Außenseite eines Bauteils oder Bauteil-Verbunds angeordnet.

Ganz besonders vorteilhaft ist es, wenn ein Oberflächenbereich oder Grenzflächenbereich durch das mindestens eine elektrische Element gleichmäßig bedeckt ist. Der bedeckte Bereich läßt sich dann bezüglich mechanischer Überlastung überwachen.

Der Erfindung liegt ferner die Aufgabe zugrunde, ein Verfahren zur Detektion von mechanischer Überbeanspruchung an einem Bauteil oder Bauteil-Verbund bereitzustellen, welches auf einfache Weise durchführbar ist.

Diese Aufgabe wird erfindungsgemäß dadurch gelöst, daß an einer Oberfläche oder Grenzfläche des Bauteils oder Bauteil-Verbunds mindestens ein flaches elektrisches Element positioniert wird und mindestens ein elektrischer Parameter des mindestens einen elektrischen Elements überwacht wird.

Das erfindungsgemäße Verfahren weist die bereits im Zusammenhang mit der erfindungsgemäßen Sensoranordnung und dem erfindungsgemäßen Bauteil bzw. Bauteil-Verbund erläuterten Vorteile auf.

Weitere vorteilhafte Ausgestaltungen wurden ebenfalls bereits im Zusammenhang mit der erfindungsgemäßen Sensoranordnung und dem erfindungsgemäßen Bauteil bzw. Bauteil-Vorkörper erläutert.

Insbesondere wird ein Oberflächenbereich oder Grenzflächenbereich mit einer Mehrzahl von flachen elektrischen Elementen abgedeckt. Die elektrischen Elemente sind flach und dabei flächig ausgebildet. Dadurch läßt sich ein großer Bereich abdecken. Durch das Vorsehen einer Mehrzahl von elektrischen Elementen wird der gesamte Oberflächenbereich bezüglich der Überwachung in eine Art von Gitternetz unterteilt und eine potentielle Beschädigung läßt sich dadurch eingrenzen.

Es ist dann ganz besonders vorteilhaft, wenn die elektrischen Elemente individuell überwacht werden. Dadurch läßt sich ein potentieller Beschädigungsort aufgrund beispielsweise eines Impacts auf eine oder mehrere elektrische Elemente eingrenzen.

Ganz besonders vorteilhaft ist es, wenn das mindestens eine elektrische Element als Batterie und/oder Akkumulator ausgebildet ist und an dem Bauteil oder Bauteil-Verbund nutzbare elektrische Energie über das mindestens eine elektrische Element gespeichert wird. Zusätzlich zu der Detektionsfunktion der elektrischen Elemente läßt sich dadurch auch nutzbare elektrische Energie speichern. Diese Speicherung ist über einen großen Flächenbereich verteilt.

Die nachfolgende Beschreibung bevorzugter Ausführungsformen dient im Zusammenhang mit der Zeichnung der näheren Erläuterung der Erfindung.

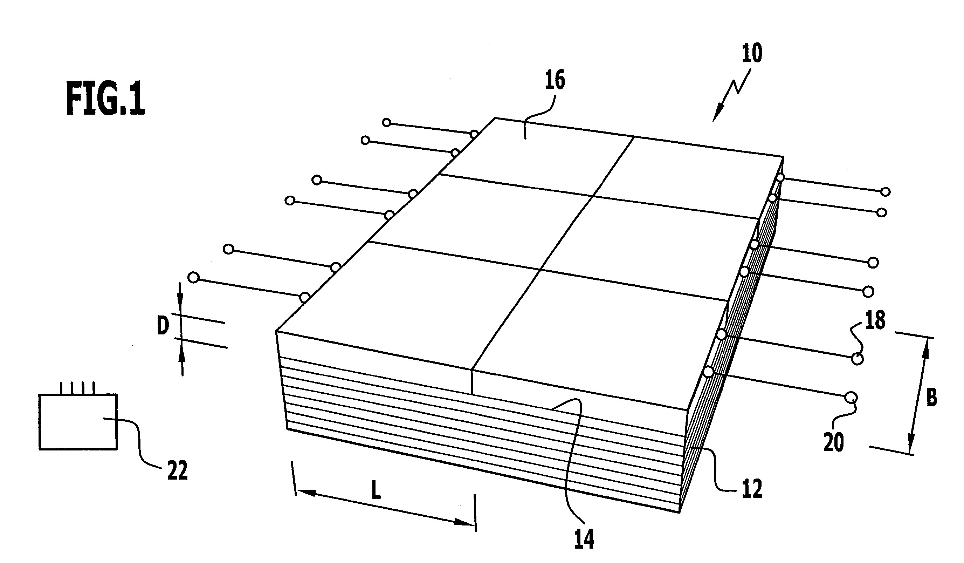

Die einzige Figur 1 zeigt schematisch ein Ausführungsbeispiel eines Bauteils mit einem Ausführungsbeispiel einer Sensoranordnung.

Ein Ausführungsbeispiel einer Sensoranordnung, welche in Figur 1 mit 10 bezeichnet ist, ist zur Positionierung an einem Bauteil 12 vorgesehen, bei dem es sich insbesondere um ein faserverstärktes Bauteil handelt (CFK-Bauteil).

Dieses Bauteil 12 weist eine Oberfläche 14 auf, an welcher die Sensoranordnung 10 positioniert ist und dabei die Oberfläche 14 mindestens in einem Oberflächenbereich gleichmäßig abdeckt.

Die Sensoranordnung 10 umfaßt eine Mehrzahl von elektrischen Elementen 16. Diese elektrischen Elementen 16 sind flach ausgebildet. Mit ihnen läßt sich ein Flächenbereich abdecken.

Die elektrischen Elemente 16 sind insbesondere in Dünnfilm-Technologie hergestellt. Ihre Dicke D ist erheblich kleiner als ihre Länge L und Breite B.

Beispielsweise weisen die elektrischen Elemente Längen- und Breitenabmessungen in der Größenordnung von 10 cm auf 10 cm oder 20 cm auf 20 cm auf.

Die elektrischen Elemente 16 können von einer (insbesondere flexiblen) Folie umfaßt sein und insbesondere in die Folie integriert sein. Die Folie mit der Mehrzahl von elektrischen Elementen 16 läßt sich dann auf einfache Weise auf dem Bauteil 12 positionieren und mit diesem beispielsweise durch Verklebung oder Verschweißung verbinden.

Die elektrischen Elemente 16 sind nebeneinander insbesondere in Zeilen und Spalten angeordnet. Benachbarte elektrische Elemente 16 sind voneinander isoliert. Diese Isolierung kann durch entsprechende Ausbildung der elektrischen Elemente 16 erreicht sein und/oder benachbarte elektrische Elemente 16 können beabstandet zueinander sein, wobei in einem Zwischenbereich zwischen beabstandeten elektrischen Elementen 16 ein Isoliermaterial angeordnet ist.

Der Abstand zwischen benachbarten elektrischen Elementen 16 ist, sofern er vorhanden ist, erheblich kleiner als die Länge L und die Breite B eines einzelnen elektrischen Elements 16, um eine im wesentlichen vollständige Abdekkung der Oberfläche 14 des Bauteils 12 in einem gewünschten Oberflächenbereich zu erhalten.

Die individuellen elektrischen Elemente 16 weisen jeweilige Anschlüsse 18, 20 auf. Über diese elektrischen Anschlüsse 18, 20 läßt sich mindestens ein elektrischer Parameter des jeweiligen elektrischen Elements 16 prüfen.

Zur Prüfung der entsprechenden elektrischen Parameter der Gesamtheit der elektrischen Elemente 16 in der Sensoranordnung 10 ist eine Überwachungseinrichtung 22 vorgesehen, welche mit jedem der elektrischen Elemente 16 verbunden ist. Die Überwachungseinrichtung 22 ist insbesondere getrennt von dem Bauteil 12 positionierbar.

Bei den elektrischen Elementen 16 kann es sich um passive elektrische Elemente oder aktive elektrische Elemente handeln. Beispielsweise sind als elektrische Elemente Kondensatoren in Dünnfilm-Technologie vorgesehen. Zwischen einer ersten Folie aus einem elektrischen Leiter und einer zweiten Folie aus einem elektrischen Leiter liegt eine Isolierschicht. Bei einer mechanischen Überbeanspruchung beispielsweise durch Impact oder Bruch kann ein Kurzschluß in dem entsprechenden elektrischen Element erzeugt werden, der durch die Überwachungseinrichtung 22 registrierbar ist, wenn diese entsprechend die Sensoranordnung 10 bezüglich Stromfluß überwacht.

Es läßt sich dabei der Kurzschluß räumlich eingrenzen, nämlich auf das spezielle elektrische Element 16, welches einen Kurzschlußstrom liefert. Dadurch wiederum ist es möglich, die mechanische Überbeanspruchung beispielsweise durch Impact auf einen definierten Flächenbereich einzugrenzen.

Ganz besonders vorteilhaft ist es, wenn die elektrischen Elemente 16 als aktive elektrische Elemente ausgebildet sind und insbesondere als Batterien oder Akkumulatoren ausgebildet sind. Batterien, welche in Dünnfilm-Technologie hergestellt sind und welche flexibel sind, sind beispielsweise unter der Bezeichnung LITESTAR von der Firma Infinite Power Solutions (www.infinitepowersolutions.com) erhältlich.

Ein entsprechend ausgebildetes elektrisches Element 16 liefert eine Spannung. Durch einen Impact wird das entsprechende elektrische Element 16 mechanisch beschädigt, was zu einer Änderung der Spannungsabgabe führt. Dies ist durch die Überwachungseinrichtung 22 detektierbar. Dadurch ist es möglich, den Ort des Impacts zu bestimmen. Das Bauteil 12 kann dann gezielt untersucht werden, ob es beschädigt ist.

Durch das Vorsehen von aktiven elektrischen Elementen 16 kann das Bauteil 12 mit seiner Sensoranordnung 10 auch zur Speicherung von nutzbarer elektrischer Energie verwendet werden. Die elektrische Energie läßt sich dabei großflächig speichern.

Bei der Herstellung des Bauteils 12 oder eines Bauteil-Verbunds läßt sich die Sensoranordnung 10 mit diesem verbinden. Insbesondere wird die Sensoranordnung 10 an einer durch Impact gefährdeten Außenseite angeordnet. Bauteile bzw. Bauteil-Verbunde, welche aus faserverstärkten Materialien hergestellt sind, werden beispielsweise in Flugzeugen eingesetzt.

Die Überwachungseinrichtung 22 ist beispielsweise von einem Flugzeug-Cockpit auslesbar. Wenn ein Impact auftritt, welcher grundsätzlich zu der Beschädigung eines entsprechenden Bauteils 12 führen kann, dann beeinflußt dieser auch die Sensoranordnung 10. Über die Überwachungseinrichtung 22 läßt sich der Impactbereich auf die Größe der entsprechenden elektrischen Elemente 16 eingrenzen. Das Bauteil 12 läßt sich dann gezielt bezüglich einer Beschädigung überprüfen.

Weiterhin läßt sich in der Sensoranordnung 10, wenn als elektrische Elemente 16 aktive elektrische Elemente eingesetzt werden, nutzbare elektrische Energie speichern. Insbesondere wird dann bei der Nutzung der elektrischen Energie dafür gesorgt, daß alle elektrischen Elemente 16 gleichmäßig entladen werden. Dadurch läßt sich auch bei einer allmählichen Entladung die Sensorwirkung der Sensoranordnung 10 gewährleisten.

Über die erfindungsgemäße Sensoranordnung läßt sich beispielsweise auch eine Bruchüberwachung für ein Bauteil 12 oder einen Bauteil-Verbund realisieren. Ferner läßt sich ein Fügebereich für Bauteile in einem Bauteil-Verbund überwachen.

Die Sensoranordnung 10 läßt sich oberflächlich an dem Bauteil 12 fixieren. Das Bauteil 12 läßt sich dadurch getrennt herstellen und die Verbindung zwischen der Sensoranordnung 10 und dem Bauteil 12 läßt sich nach der Fertigstellung des Bauteils 12 durchführen.

## Patentansprüche

1. Sensoranordnung zur Detektion der mechanischen Überbeanspruchung eines Bauteils (12) oder Bauteil-Verbunds, mit mindestens einem flach ausgebildeten elektrischen Element (16) und mit einer Überwachungseinrichtung (22) zur Prüfung mindestens eines elektrischen Parameters des mindestens einen elektrischen Elements (16), wobei durch das mindestens eine elektrische Element (16) ein Flächenbereich des Bauteils (12) bedeckbar ist.

2. Sensoranordung nach Anspruch 1, **dadurch gekennzeichnet, daß** eine Mehrzahl von elektrischen Elementen (16) vorgesehen ist, welche individuell überwachbar sind.

3. Sensoranordnung nach Anspruch 2, **dadurch gekennzeichnet, daß** die elektrischen Elemente (16) nebeneinander angeordnet sind.

4. Sensoranordnung nach Anspruch 2 oder 3, **dadurch gekennzeichnet, daß** die elektrischen Elemente (16) mit der Überwachungseinrichtung (22) verbunden sind.

5. Sensoranordnung nach einem der vorangehenden Ansprüche, **dadurch gekennzeichnet, daß** das mindestens eine elektrische Element (16) von einer Folie umfaßt ist.

6. Sensoranordnung nach Anspruch 5, **dadurch gekennzeichnet, daß** das mindestens eine elektrische Element (16) in eine Folie integriert ist.

7. Sensoranordnung nach Anspruch 5 oder 6, **dadurch gekennzeichnet, daß** die Folie elektrische Anschlüsse aufweist.

8. Sensoranordnung nach einem der vorangehenden Ansprüche, **dadurch gekennzeichnet, daß** mindestens ein passives elektrisches Element vorgesehen ist.

9. Sensoranordnung nach Anspruch 8, **dadurch gekennzeichnet, daß** ein Kondensator als elektrisches Element vorgesehen ist.

10. Sensoranordnung nach einem der vorangehenden Ansprüche, **dadurch gekennzeichnet, daß** mindestens ein aktives elektrisches Element (16) vorgesehen ist.

11. Sensoranordnung nach Anspruch 10, **dadurch gekennzeichnet, daß** eine Batterie und/oder ein Akkumulator als elektrisches Element (16) vorgesehen ist.

12. Sensoranordnung nach Anspruch 10 oder 11, **dadurch gekennzeichnet, daß** über die Überwachungseinrichtung (22) nutzbare elektrische Energie auskoppelbar ist.

13. Sensoranordnung nach einem der vorangehenden Ansprüche, **dadurch gekennzeichnet, daß** das mindestens eine elektrische Element (16) ein Dünnfilm-Element ist.

14. Bauteil, insbesondere aus einem Faserverbundwerkstoff, oder Bauteil-Verbund, welches/welcher mit einer Sensoranordnung (10) gemäß einem der vorangehenden Ansprüche versehen ist.

15. Bauteil nach Anspruch 14, **dadurch gekennzeichnet, daß** die Sensoranordnung (10) an mindestens einer Oberfläche (14) oder Grenzfläche angeordnet ist.

16. Bauteil nach Anspruch 15, **dadurch gekennzeichnet, daß** die Sensoranordnung (10) an einer durch Impact gefährdeten Oberfläche (12) oder Grenzfläche angeordnet ist.

17. Bauteil nach Anspruch 15 oder 16, **dadurch gekennzeichnet, daß** ein Oberflächenbereich oder Grenzflächenbereich durch das mindestens eine elektrische Element (16) gleichmäßig bedeckt ist.

18. Verfahren zur Detektion von mechanischer Überbeanspruchung an einem Bauteil oder Bauteil-Verbund, bei dem an einer Oberfläche oder Grenzfläche des Bauteils oder Bauteil-Verbunds mindestens ein flaches elektrisches Element positioniert wird und mindestens ein elektrischer Parameter des mindestens einen elektrischen Elements überwacht wird.

19. Verfahren nach Anspruch 18, **dadurch gekennzeichnet, daß** ein Oberflächenbereich oder Grenzflächenbereich mit einer Mehrzahl von flachen elektrischen Elementen abgedeckt wird.

20. Verfahren nach Anspruch 19, **dadurch gekennzeichnet, daß** die elektrischen Elemente individuell überwacht werden.

21. Verfahren nach einem der Ansprüche 18 bis 20, **dadurch gekennzeichnet, daß** das mindestens eine elektrische Element als Batterie und/oder Akkumulator ausgebildet ist und an dem Bauteil oder Bauteil-Verbund nutzbare elektrische Energie über das mindestens eine elektrische Element gespeichert wird.
